# EUROPÄISCHE PATENTANMELDUNG

(11) **EP 3 187 443 A1**
(43) Veröffentlichungstag der Anmeldung: **05.07.2017**
(21) Anmeldenummer: 16207375.3
(22) Anmeldetag: 29.12.2016
(51) Int. Cl.: B65G 69/16, B65G 15/42

(54) **SCHONGURT-VORRICHTUNG**

(30) Priorität: 02.01.2016 DE 102016000003
(71) Anmelder: SK-Technologies GmbH, 78733 Aichhalden-Rötenberg (DE)
(72) Erfinder: Kruck, Stefan Andreas, 78733 Aichhalden-Rötenberg (DE)
(74) Vertreter: Westphal, Mussgnug & Partner Patentanwälte mbB

(57) **Zusammenfassung**

Die vorliegende Erfindung betrifft eine Schongurt-Vorrichtung zum Auffangen von Bauteilen (B), aufweisend einen Schongurt (14) zum Auffangen der Bauteile (B), der von zumindest zwei Umlenkrollen (22) geführt wird und endlos um die zumindest zwei Umlenkrollen (22) läuft, ein Behältnis (12) zum Lagern der aufgefangenen Bauteile (B), und ein Antriebsritzel (28) zum Antrieb des Schongurtes (14), wobei eine erste Umlenkrolle (22₁) im Bereich einer ersten Behälterwand (18) in einer ersten Höhe (H₁) angeordnet ist und eine zweite Umlenkrolle (22₂) im Bereich einer der ersten Behälterwand (18) gegenüberliegend angeordneten zweiten Behälterwand (20) in einer im Vergleich zur ersten Höhe (H₁) niedrigeren zweiten Höhe (H₂) angeordnet ist, und die Antriebsrichtung (D) des Antriebsritzel (28)s (28) derart ausgelegt ist, dass die Antriebsrichtung (D) der unteren Gurtschlaufe (26) des Schongurts (14) von der zweiten Umlenkrolle (22) zur ersten Umlenkrolle (22₁) verläuft.

## Beschreibung

Die vorliegende Erfindung betrifft eine Schongurt-Vorrichtung gemäß dem Oberbegriff des Patentanspruchs 1.

Mit einer solchen Schongurt-Vorrichtung werden Bauteile schonend in einem dafür vorgesehenes Behältnis abgelegt und dort gelagert. Hiermit sollen Beschädigungen an den Bauteilen vermieden werden. Hauptanwendungsgebiet ist das schonende Ablegen von Bauteilen, welche aus einer gewissen Höhe in das Behältnis fallen, beispielsweise von einem Fließband.

Bekannte Hilfsmittel zur schonenden Ablage von Bauteilen bedingen komplexe Mechanismen oder bieten unzureichenden Schutz vor Beschädigungen an den Bauteilen. So sind beispielsweise einfache Platten bekannt, die in die Behältnisse hineingestellt und nach einer gewissen Zeit unter den bereits hineingefallenen Bauteilen herausgezogen werden. Dies kann nur mit einem recht komplexen Aufbau automatisiert werden.

Die vorliegende Schongurt-Vorrichtung ähnelt einem Förderer. Bekannte Fördertechnologien sind darauf ausgelegt, Bauteile aus einem Behältnis (auch Bunker genannt) heraus und/oder über bestimmte Wege hinweg zu fördern. In vielen Fällen dienen Förderer dazu, Bauteile von einem niedrigeren Niveau, wo die Bauteile gelagert sind, auf ein höheres Niveau zu fördern, wo sie weiter transportiert oder bearbeitet werden können. Derartige Förderer sind aus der US 6 702 151 B1 und der US 6 378 691 B2 bekannt.

Erfindungsgemäß sollen mit dem neuen Aufbau jedoch Bauteile in das Behältnis/Bunker hinein gefördert, schonend im Behältnis aufgefangen und dann abgelegt werden. Vorrichtungen, mit denen fallende Körper schonend aufgefangen werden können, sind beispielsweise aus der DE 40 41 692 C1 bekannt. Die dort offenbarte Vorrichtung dient aber ausschließlich zum Auffangen von Körpern, die in der Wissenschaft zu Untersuchungen im freien Fall eingesetzt werden. Bei derartigen Untersuchungen spielt das Ablegen und Lagern der aufgefangenen Körper keine Rolle. Insofern können die aufgefangenen Körper mit der in der DE 40 41 692 C1 offenbarten Vorrichtung nicht transportiert und abgelegt werden.

Es ist Aufgabe einer Ausführungsform der vorliegenden Erfindung, die Fallenergie der Bauteile abzufedern und eine schonende Ablage dieser Bauteile im Behältnis zu ermöglichen. Der Aufbau soll mit möglichst wenigen Elementen auskommen.

Dies wird mit den Merkmalen nach Patentanspruch 1 umfänglich gelöst. Vorteilhafte Ausgestaltungen und Weiterbildungen der Erfindung sind in den Unteransprüchen angegeben.

Eine Ausbildung der Erfindung betrifft eine Schongurt-Vorrichtung zum abgefederten Auffangen von fallenden Bauteilen, aufweisend einen Schongurt zum abgefederten Auffangen der fallenden Bauteile, der von zumindest zwei Umlenkrollen geführt wird und endlos um die zumindest zwei Umlenkrollen läuft, wobei der Schongurt eine obere Gurtschlaufe und eine untere Gurtschlaufe bildet, ein Behältnis zum Lagern der aufgefangenen Bauteile, und ein Antriebsritzel zum Antrieb des Schongurtes, wobei eine erste Umlenkrolle im Bereich einer ersten Behälterwand in einer ersten Höhe angeordnet ist und eine zweite Umlenkrolle im Bereich einer der ersten Behälterwand gegenüberliegend angeordneten zweiten Behälterwand in einer im Vergleich zur ersten Höhe niedrigeren zweiten Höhe angeordnet ist, und die Antriebsrichtung des Antriebsritzels derart ausgelegt ist, dass die Antriebsrichtung der unteren Gurtschlaufe des Schongurts von der zweiten Umlenkrolle zur ersten Umlenkrolle verläuft.

Ein wesentlicher Aspekt der Erfindung ist derjenige, dass die Antriebsrichtung der oberen Gurtschlaufe von der in Bezug auf den Boden des Behältnisses auf der größeren ersten Höhe angeordneten ersten Umlenkrolle zur niedriger angeordneten zweiten Umlenkrolle verläuft. Gegenstände wie Körper und Bauteile können nur auf der oberen Gurtschlaufe aufgefangen und transportiert werden, da sie von der unteren, zum Boden hinzeigenden Gurtschlaufe herunterfallen würden. Im Gegensatz zu den eingangs genannten Förderern kann ein Gegenstand gemäß der vorliegenden Vorrichtung nur von einem höheren auf ein niedrigeres Niveau transportiert werden. Eine derartige Förderung wäre bei bekannten Förderern nicht sinnvoll, da hierdurch Energie verbraucht würde, die auch von der kinetischen Energie der Gegenstände bereitgestellt werden kann. Die kinetische Energie kann bei bekannten Förderern dadurch genutzt werden, dass die Gegenstände entlang von Rutschen auf das niedrigere Niveau gleiten. Hierin liegt ein wesentliches Unterscheidungsmerkmal der erfindungsgemäßen Vorrichtung, die nicht das Ziel verfolgt, einen Gegenstand von einem niedrigeren auf ein höheres Niveau zu fördern, sondern einen Gegenstand oberhalb des Bodens des Behältnisses aufzufangen und ihn danach schonend auf dem niedrigeren Niveau im Behältnis abzulegen und dort zu verteilen. Eine Förderung findet nur dann statt, nachdem der Gegenstand aufgefangen worden ist, um ihn anschließend abzulegen.

Das Antriebsritzel kann dabei an jeder geeigneten Stellung in den Schongurt eingreifen, wobei es sich anbietet, eine oder beide der Umlenkrollen als Antriebsritzel auszugestalten. Die Drehrichtung des Antriebsritzels ist also derart gesteuert, dass nur Zugbewegung des Schongurtes und keine Druckbewegung über der Bodenfläche erzeugt werden.

In einer Weiterbildung der Erfindung ist der Schongurt derart gestaltet, dass auf diesem eine Anzahl von Lamellen angeordnet ist, welche Öffnung aufweisen, die entgegen der Antriebsrichtung des Schongurtes weisen. Auch in dieser Weiterbildung äußert sich der Kerngedanke der Erfindung, die Gegenstände nicht von einem niedrigeren auf ein höheres Niveau fördern zu wollen, sondern die Gegenstände aufzufangen und im Behältnis abzulegen. Beispielsweise aus der Figur 2 der US 6 378 691 B2 geht hervor, dass die Öffnungen der Lamellen, welche dafür sorgen, dass die Gegenstände nicht von den geneigten Förderbändern herunterrollen, in die Antriebsrichtung der Förderbänder zeigen. Im Gegensatz dazu dienen die Lamellen der vorschlagsgemäßen Vorrichtung dazu, die aufgefangenen Gegenstände dann, wenn der Schongurt die zweite Umlenkrolle durchläuft, über die Öffnungen aufzunehmen und zu verhindern, dass die Gegenstände unkontrolliert auf den Boden des Behältnisses fallen.

Vorteilhafterweise sind die Lamellen derart mit verschlossenen Seitenflächen gestaltet, dass diese als Taschen ausgebildet sind, womit lediglich eine Seite geöffnet ist. Diese geöffnete Taschenseite weist ihre Öffnung entgegen der Antriebsrichtung des Schongurtes auf. Die Taschen bewirken, dass die Gegenstände, die über die Öffnungen in die Taschen gerutscht sind, hier in gewissem Maße geführt werden und nicht sofort wieder herausfallen. Insofern ist auch eine Förderung auf der unteren Gurtschlaufe möglich, solange die Steigung des Schongurts nicht so stark ist, dass die in den Taschen aufgenommenen Gegenstände wieder herausfallen. Hierdurch ist eine gleichmäßige Verteilung der aufgenommenen Gegenstände innerhalb des Behältnisses möglich.

In einer weiteren Ausgestaltung der vorschlagsgemäßen Vorrichtung sind die Lamellen derart angeordnet und oder ausgebildet, dass deren Öffnung während des Laufs im Bereich der oberen Gurtschlaufe geschlossen liegen und während des Laufs im Bereich der unteren Gurtschlaufe die eigene Gewichtskraft und/oder die Gewichtskraft des transportierten Bauteils die Öffnung freigibt, wobei der Öffnungsvorgang im Bereich der zweiten Umlenkrolle beginnt. Wie bereits zuvor erörtert, werden die Öffnungen der Lamellen dann geöffnet, wenn sie die zweite Umlenkrolle durchlaufen. Ohne die Lamellen würden die Gegenstände vom Schongurt fallen. Da aber die Lamellen beim Durchlaufen der zweiten Umlenkrolle geöffnet werden, fallen die auf der oberen Gurtschlaufe aufgefangenen Gegenstände in die Taschen hinein und können dann zumindest ein Stück weit auch entlang der unteren Gurtschlaufe gefördert und somit innerhalb des Behältnisses verteilt werden.

Vorschlagsgemäß sind die Seitenflächen der Lamellen derart verschlossen, dass die Lamellen eine Taschenform ausbilden. Auch hierdurch wird die Möglichkeit, die aufgefangenen Gegenstände in den Taschen aufzunehmen und auch entlang der unteren Gurtschlaufe zu fördern, verbessert. Die Gegenstände werden auf die bereits beschriebene Weise beim Durchlaufen der zweiten Umlenkrolle in die taschenförmigen Lamellen eingebracht und anschließend entlang der unteren Gurtschlaufe gefördert.

Gemäß einer Ausführungsform sind die Lamellen mittels eines Scharniers am Schongurt angeordnet. Mittels eines Scharniers können zwei feste Gegenstände drehbar miteinander befestigt werden. Insofern können die Lamellen beispielsweise aus Metallplatten gefertigt werden, wodurch beispielsweise gegenüber Lamellen aus Textilien der Vorteil erzielt werden kann, dass auch schwerere Gegenstand aufgefangen und in den Lamellen transportiert werden können. Auch führen Gegenstände, welche eine scharfe Kante aufweisen, nicht zu einer Beschädigung der Lamellen. Mittels des Scharniers kann die Lamelle eine besser geführte Bewegung ausführen. Die Lamelle ist leichtgängiger, als eine direkte Befestigung am Schongurt, beispielsweise mittels Verklebung.

Gemäß einer weitergebildeten Ausgestaltung umfasst die erste Umlenkrolle oder die zweite Umlenkrolle das Antriebsritzel. Prinzipiell kann das Antriebsritzel an jedem Ort angeordnet sein, in welchem es zum Antreiben in den Schongurt eingreifen kann. Wenn jedoch das Antriebsritzel in die erste oder zweite Umlenkrolle integriert ist oder die Umlenkrollen bildet, kann die Anzahl der Komponenten der Schongurt-Vorrichtung reduziert werden, wodurch die Kosten und die Ausfallwahrscheinlichkeit gering gehalten werden können.

Eine weitere Ausgestaltung der Erfindung weist eine Stützplatte unter der oberen Gurtschlaufe auf. Mit dieser Stützplatte wird ein Verwickeln der Gurtschlaufe verhindert.

Gemäß einer bevorzugten Ausgestaltung der Erfindung sind die Lamellen derart angeordnet und/oder ausgebildet, dass deren Öffnung während des Umlaufs am Band aufliegen oder frei geöffnet sein kann. Im Laufbereich der oberen Gurtschlaufe liegen die Lamellen geschlossen auf dem Schongurt auf. Im Bereich der unteren Gurtschlaufe öffnen sich die Lamellen entweder über das Eigengewicht und/oder über das Gewicht des transportierten Bauteils. Der eigentliche Öffnungsvorgang beginnt im von der zweiten Umlenkrolle gebildeten Umlenkbereich. Bei geeigneter Anordnung der Lamellen, wenn diese beispielsweise nahe genug aneinander liegen, fallen Bauteile im von der zweiten Umlenkrolle gebildeten Umlenkbereich in die Öffnung der Lamellen. Hier werden diese so lange gehalten, bis eine Bewegung des Schongurtes das Herausfallen begünstigt. Dieses Herausfallen tritt insbesondere dann auf, wenn der Schongurt nach oben weist und eine Steigung durchläuft. Ist das Behältnis bereits mit einigen Bauteilen gefüllt, bewirken diese, dass der Schongurt eine Steigung durchläuft und die Bauteile aus den Lamellen herausfallen. Das Behältnis wird somit gleichmäßig gefüllt.

In einer Weiterbildung der Erfindung ist der Schongurt mittels eines Laufschutzes derart auf dem Antriebsritzel gehalten, dass dieser nicht aus dem Antrieb des Antriebsritzels herausrutschen kann.

In einer weiteren Ausgestaltung der Erfindung wird der Schongurt vom Antriebsritzel mittels Formschluss angetrieben. Es sind hierbei bekannte formschlüssige Mitnahmevarianten wie Lochungen im Schongurt oder Verzahnungen denkbar.

Gemäß einer vorteilhaften Ausgestaltung der Erfindung wird der Schongurt vom Antriebsritzel mittels Kraftschluss angetrieben. Somit ist ein gewisser Schlupf möglich, welcher gleichzeitig eine Funktion einer Rutschkupplung ausführen kann, welche dann wirkt, wenn der Schongurt beispielsweise blockiert.

Die Erfindung wird anhand der nachfolgenden Figuren ausführlich erläutert. Es zeigen:
- Fig. 1: eine Seitenschnittansicht einer Schongurt-Vorrichtung nach einem ersten Ausführungsbeispiel,
- Fig. 2: eine Seitenschnittansicht nach einem zweiten Ausführungsbeispiel, bei welchem der Schongurt eine Anzahl von Lamellen aufweist,
- Fig. 3: eine Seitenschnittansicht des in Figur 2 dargestellten Ausführungsbeispiels der Schongurt-Vorrichtung, bei welcher das Behältnis etwa zu einem Viertel gefüllt ist,
- Fig. 4: eine perspektivische Darstellung eines Teilbereichs eines Schongurtes mit einer geöffneter Tasche,
- Fig. 5: eine Seitenschnittansicht eines Teilbereichs eines Schongurts mit einer Lamelle, die mittels eines Scharniers am Schongurt befestigt ist, und
- Fig. 6: eine Seitenschnittansicht einer Schongurt-Vorrichtung nach einem dritten Ausführungsbeispiel mit Stützplatte und leerem Behältnis.

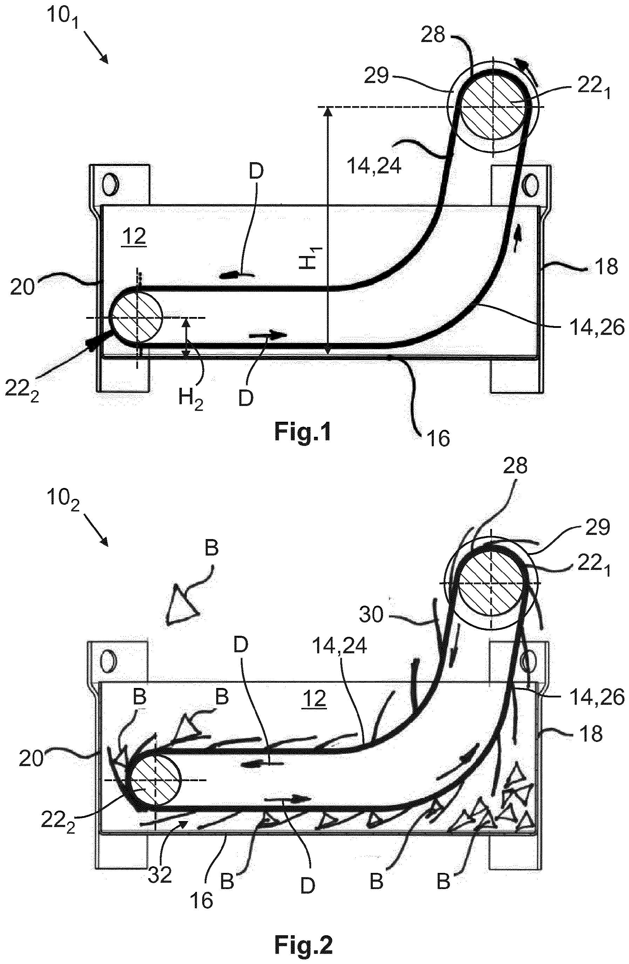

In der Seiten-Schnittansicht nach Figur 1 ist eine Schongurt-Vorrichtung 10₁ nach einem ersten Ausführungsbeispiel dargestellt, welches ein Behältnis 12 zum Lagern von Bauteilen B und einen Schongurt 14 zum abgefederten Auffangen der Bauteile B umfasst, welche beispielsweise von einem nicht dargestellten Förderband herunter fallen. Das Behältnis 12 ist in dieser Darstellung noch völlig ohne Bauteile B. Das Behältnis 12 weist einen Boden 16, eine erste Behälterwand 18 und eine zweite Behälterwand 20 auf, wobei die zweite Behälterwand 20 der ersten Behälterwand 18 gegenüberliegend angeordnet ist.

Der Schongurt 14 ist endlos ausgebildet und läuft um eine erste Umlenkrolle 22₁ und eine zweite Umlenkrolle 22₂. Die erste Umlenkrolle 22₁ ist im Bereich der ersten Behälterwand 18 und die zweite Umlenkrolle 22₂ im Bereich der zweiten Behälterwand 20 angeordnet. Die erste Umlenkrolle 22₁ ist in Bezug auf den Boden 16 des Behältnisses 12 in einer ersten Höhe H₁ und die zweite Umlenkrolle 22₂ in einer zweiten Höhe H₂ angeordnet, wobei die erste Höhe H₁ größer ist als die zweite Höhe H₂. Der Schongurt 14 weist eine obere Gurtschlaufe 24 und eine untere Gurtschlaufe 26 auf, welche von den Umlenkrollen 22₁, 22₂ getrennt werden. Die obere Gurtschlaufe 24 weist vom Boden 16 des Behältnisses 12 weg, während die untere Gurtschlaufe 26 zum Boden 16 hinzeigt.

Die erste Umlenkrolle 22 umfasst ein Antriebsritzel 28, mit welchem der Schongurt 14 in eine Antriebsrichtung D angetrieben wird. Das Antriebsritzel 28 kann in nicht dargestellte Ausnehmungen oder Durchbrüche des Schongurts 14 eingreifen, so dass ein formschlüssiger Antrieb realisiert ist. Prinzipiell kann das Antriebsritzel 28 an jeder Stelle angeordnet sein, in welcher es in den Schongurt 14 eingreifen kann. Allerdings bietet sich die Integration des Antriebsritzels 28 in die erste Umlenkrolle 22₁ an, da die Anzahl der Komponenten reduziert werden kann. Zudem können die Belastungen des Schongurts 14 gering gehalten werden, wenn das Antriebsritzel 28 am höchsten Punkt des Schongurts 14 in diesen eingreift, da der Schongurt hierdurch weitgehend auf Zug belastet wird. Um zu verhindern, dass der Schongurt 14 vom Antriebsritzel 28 abrutscht, ist ein Laufschutz 29 vorgesehen, welcher, wie dargestellt, als zwei Scheiben mit größerem Durchmesser als das Antriebsritzel 28 ausgeführt ist, zwischen denen der Schongurt 14 geführt wird.

Der Schongurt 14 ist glatt, also ohne Lamellen 30 oder ähnlich dargestellt. Somit ergibt sich eine schonende Füllung des Behältnisses 12, jedoch eine recht ungleichmäßige Füllung, da die Bauteile B stets an der dem Antriebsritzel 28 entgegen gesetzt angeordneten zweiten Behälterwand 20 vom Schongurt 14 fallen.

In der Seitenschnittansicht nach Figur 2 ist ein Schnitt durch ein zweites Ausführungsbeispiel der erfindungsgemäßen Schongurt-Vorrichtung 10₂ dargestellt. Das Behältnis 12 ist mit noch wenigen Bauteilen B befüllt. Gemäß dem zweiten Ausführungsbeispiel der Schongurt-Vorrichtung 10₂ ist auf dem Schongurt 14 eine Anzahl von Lamellen 30 angeordnet, welche Öffnungen 32 aufweisen, die entgegen der Antriebsrichtung D des Schongurts 14 weisen. Diese Lamellen 30 sind derart ausgebildet oder angeordnet, dass die Öffnung 32 während des Umlaufs am Schongurt 14 aufliegen oder frei geöffnet sein kann. Die Lamellen 30 weisen daher eine Taschenform auf. Im Laufbereich der oberen Gurtschlaufe 24 liegen die Lamellen 30 geschlossen auf dem Schongurt 14 auf. Im Bereich der unteren Gurtschlaufe 26 öffnen sich die Lamellen 30 entweder aufgrund des Eigengewichts und/oder des Gewichts des transportierten Bauteils B. Der eigentliche Öffnungsvorgang beginnt im Bereich der zweiten Umlenkrolle 22₂. Bei geeigneter Anordnung der Lamellen 30, wenn diese beispielsweise nahe genug aneinander liegen, fallen Bauteile B beim Durchlaufen der zweiten Umlenkrolle 22₂ in die Öffnung 32 der Lamellen 30. Die Bauteile B werden so lange in den Lamellen 30 gehalten, bis eine Bewegung des Schongurts 14 das Herausfallen begünstigt. Dieses Herausfallen tritt insbesondere dann auf, wenn der Schongurt 14 nach oben weist. Das Behältnis 12 wird somit gleichmäßig gefüllt.

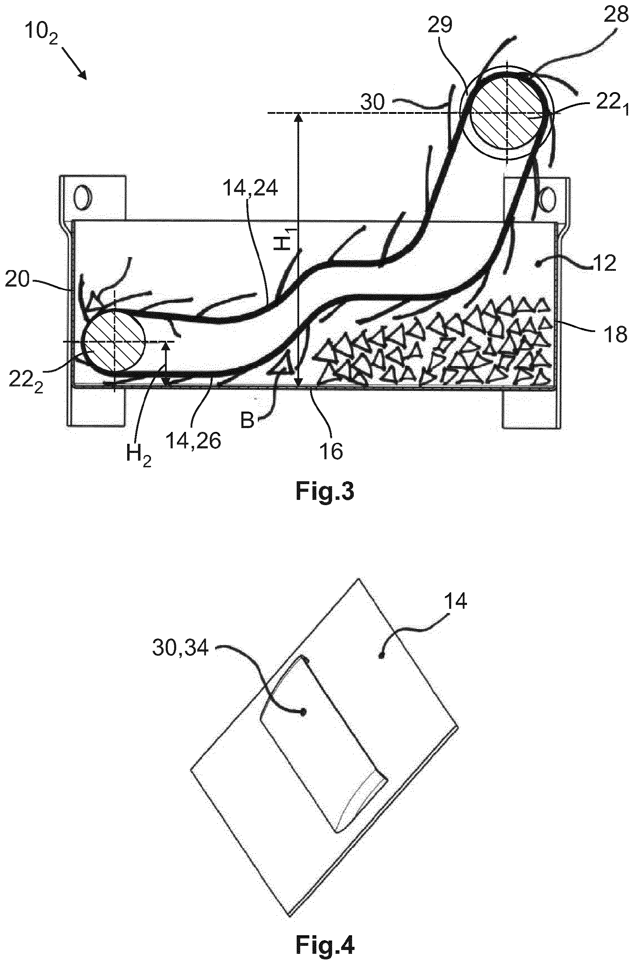

Die in Figur 3 dargestellte Schongurt-Vorrichtung 10₂ nach dem zweiten Ausführungsbeispiel weist ein volleres Behältnis 12 auf. In dieser Darstellung ist zu sehen, wie die innerhalb der Lamelle 30 liegenden Bauteile B dann an der Position herausfallen, an der die untere Gurtschlaufe 26 über die bereits abgelegten Bauteile B hinweg läuft und folglich eine größere Steigung durchläuft.

In der perspektivischen Darstellung nach Figur 4 ist eine Lamelle 30 mit Seitenflächen dargestellt, die auf dem Schongurt 14 befestigt ist, beispielsweise durch Aufnähen oder Aufkleben. Durch diese Ausprägung der Lamelle 30 ist die bereits erwähnte Taschenform gegeben. Die Lamelle 30 ist somit als eine Tasche 34 ausgeprägt.

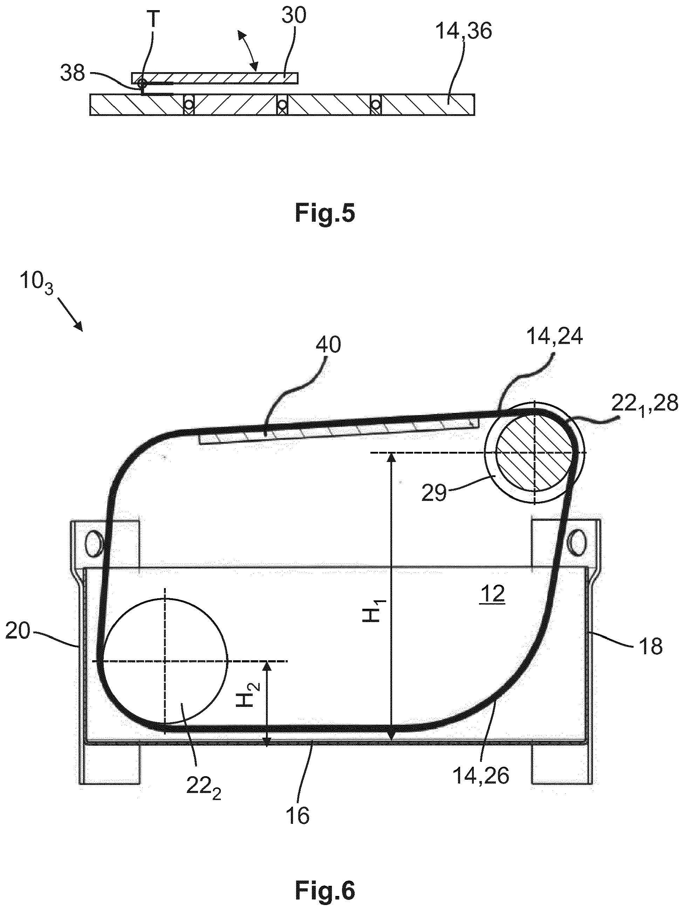

In Figur 5 ist ein Teilbereich des Schongurts 14 anhand einer prinzipiellen Seitenschnittansicht dargestellt. Man erkennt, dass der Schongurt 14 eine Anzahl von starren Gurtgliedern 36 aufweist, die um eine senkrecht zur Darstellungsebene der Figur 5 verlaufende Drehachse drehbar miteinander verbunden sind. Die Lamelle 30 ist über ein Scharnier 38 mit einem Gurtglied 36 des Schongurts 14 verbunden. Das Scharnier 38 verbindet die Lamelle 30 um eine ebenfalls senkrecht zur Darstellungsebene verlaufende Drehachse T drehbar mit dem Schongurt 14.

Die Seitenschnittansicht nach Figur 6 zeigt einen Schnitt durch ein drittes Ausführungsbeispiel der erfindungsgemäßen Schongurt-Vorrichtung 10₃. Das Behältnis 12 ist in dieser Darstellung noch völlig ohne Bauteile B. Die dargestellten Bauteile B fallen auf den Schongurt 14. Unter der oberen Gurtschlaufe 24 ist eine Stützplatte 40 angeordnet. Diese Stützplatte 10 verhindert ein ungewolltes Verwickeln des Schongurts 14. Die Bauteile B fallen somit auf den Schongurt 14, der direkt von der Stützplatte 40 abgestützt ist. Diese Variante ist besonders dann sinnvoll, wenn der Schongurt 14 mit Lamellen 30 versehen ist, da ohne diese Lamellen 30 eine zu hohe Fallhöhe der Bauteile B gegeben sein könnte.

### Bezugszeichenliste

- 10, 10₁ - 10₃: Schongurt-Vorrichtung
- 12: Behältnis
- 14: Schongurt
- 16: Boden
- 18: erste Behälterwand
- 20: zweite Behälterwand
- 22, 22₁, 22₂: Umlenkrolle
- 24: obere Gurtschlaufe
- 26: untere Gurtschlaufe
- 28: Antriebsritzel
- 29: Laufschutz
- 30: Lamellen
- 32: Öffnungen
- 34: Tasche
- 36: Gurtglied
- 38: Scharnier
- 40: Stützplatte

- B: Bauteile
- D: Antriebsrichtung
- H₁: erste Höhe
- H₂: zweite Höhe
- T: Drehachse

## Patentansprüche

1. Schongurt-Vorrichtung zum abgefederten Auffangen von fallenden Bauteilen (B), aufweisend
- einen Schongurt (14) zum abgefederten Auffangen der fallenden Bauteile (B), der von zumindest zwei Umlenkrollen (22) geführt wird und endlos um die zumindest zwei Umlenkrollen (22) läuft, wobei der Schongurt (14) eine obere Gurtschlaufe (24) und eine untere Gurtschlaufe (26) bildet,
- ein Behältnis (12) zum Lagern der aufgefangenen Bauteile (B), und
- ein Antriebsritzel (28) zum Antrieb des Schongurtes (14), wobei
- eine erste Umlenkrolle (22₁) im Bereich einer ersten Behälterwand (18) in einer ersten Höhe (H₁) angeordnet ist, und
- eine zweite Umlenkrolle (22₂) im Bereich einer der ersten Behälterwand (18) gegenüberliegend angeordneten zweiten Behälterwand (20) in einer im Vergleich zur ersten Höhe (H₁) niedrigeren zweiten Höhe (H₂) angeordnet ist, und
- die Antriebsrichtung (D) des Antriebsritzels (28) derart ausgelegt ist, dass die Antriebsrichtung (D) der unteren Gurtschlaufe (26) des Schongurts (14) von der zweiten Umlenkrolle (22) zur ersten Umlenkrolle (22₁) verläuft.

2. Schongurt-Vorrichtung nach Anspruch 1, **dadurch gekennzeichnet, dass** der Schongurt (14) derart ausgebildet ist, dass auf diesem eine Anzahl von Lamellen (30) angeordnet ist, deren Öffnungen (32) entgegen der Antriebsrichtung (D) des Schongurtes (14) weisen.

3. Schongurt-Vorrichtung nach Anspruch 2,
**dadurch gekennzeichnet, dass** die Lamellen (30) derart angeordnet und oder ausgebildet sind, dass deren Öffnung (32) während des Laufs im Bereich der oberen Gurtschlaufe (24) geschlossen liegen und während des Laufs im Bereich der unteren Gurtschlaufe (26) die eigene Gewichtskraft und/oder die Gewichtskraft des transportierten Bauteils die Öffnung (32) freigibt, wobei der Öffnungsvorgang im Bereich der zweiten Umlenkrolle (22₂) beginnt.

4. Schongurt-Vorrichtung nach einem der Ansprüche 2
oder 3, **dadurch gekennzeichnet, dass** die Seitenflächen der Lamellen (30) derart verschlossen sind, dass die Lamellen (30) eine Taschenform ausbilden.

5. Schongurt-Vorrichtung nach einem der Ansprüche 2 bis 4, **dadurch gekennzeichnet, dass** die Lamelle (30) mittels eines Scharniers (38) am Schongurt (14) angeordnet ist.

6. Schongurt-Vorrichtung nach einem der vorhergehenden Ansprüche, **dadurch gekennzeichnet, dass** eine Stützplatte (40) unter der oberen Gurtschlaufe (24) angeordnet ist.

7. Schongurt-Vorrichtung nach einem der vorhergehenden Ansprüche, **dadurch gekennzeichnet, dass** die erste Umlenkrolle (22₁) oder die zweite Umlenkrolle (22₂) das Antriebsritzel (28) umfasst.

8. Schongurt-Vorrichtung nach einem der vorhergehenden Ansprüche, **dadurch gekennzeichnet, dass** ein Laufschutz (29) den Schongurt (14) auf dem Antriebsritzel (28) hält.

9. Schongurt-Vorrichtung nach einem der vorhergehenden Ansprüche, **dadurch gekennzeichnet, dass** das Antriebsritzel (28) den Schongurt (14) formschlüssig antreibt.

10. Schongurt-Vorrichtung nach einem der vorhergehenden Ansprüche, **dadurch gekennzeichnet, dass** das Antriebsritzel (28) den Schongurt (14) kraftschlüssig antreibt.
